# EUROPEAN PATENT APPLICATION

(11) **EP 4 407 366 A1**
(43) Date of publication of application: **31.07.2024**
(21) Application number: 23153645.9
(22) Date of filing: 27.01.2023
(51) Int. Cl.: G02B 27/48

(54) **OPTICAL DEVICE**

(71) Applicant: VitreaLab GmbH, 1230 Wien (AT)
(72) Inventor: Greganti, Chiara, 1080 Wien (AT); Gertler, Shai, 1030 Wien (AT); Pitsios, Ioannis, 1030 Wien (AT); Zeuner, Jonas, 1030 Wien (AT)
(74) Representative: SONN Patentanwälte GmbH & Co KG

(57) **Abstract**

The present disclosure concerns an optical device (1) for providing illumination of an area (2), comprising:
- a despeckling device (3) configured for dynamically and continuously altering beam paths and/or phases of light beams incident on the despeckling device (3),
- a multi-beam optical element (4) configured for emitting at least two light beams (5) at the despeckling device upon coupling of light into the multi-beam optical element (4),
wherein each one of the at least two light beams (5) is emitted by the multi-beam optical element (4) from a position (6), which differs from the positions (6) from which the respective other ones of the at least two light beams (5) are emitted by the multi-beam optical element (4),
wherein the at least two light beams (5) are emitted such that each one of the at least two light beams (5) at least partially overlaps with at least another one of the at least two light beams (5) at the area (2) to be illuminated.

## Description

The present disclosure concerns an optical device for providing illumination of an area. In particular, the present invention concerns an optical element for providing flooding illumination, e.g. for use in AR or VR applications.

Such devices are necessary e.g. for providing illumination of the display in AR or VR devices. These applications require illumination devices that are bright, energy efficient and compact. In particular, they should have a low etendue, since light emitted with a larger etendue may be lost and, thus, negatively influence the brightness and energy efficiency. E.g. in AR applications, the limiting factor is the input pupil of the combiner waveguide (e.g. 3x3 mm and 30° acceptance angle); all light emitted with a larger etendue than this is lost. If LEDs are used for illumination, their size needs to be small in order to achieve a low etendue. LEDs can only achieve a certain brightness if their size is limited, because as the current density increases the efficiency drops. Therefore, there is a fundamental limit to how much light can be provided by a LED-based illumination device that should achieve a low etendue. Further, the light emitted by LEDs typically has to be first collimated with mirror or lens structures and then the three colors have to be superimposed and mixed to achieve homogeneous illumination. This restricts the compactness of such an illumination device.

Further, the illumination required e.g. for an LCOS projector is collimated, meaning that the light should propagate with a small opening angle. LEDs emit light at a 180° opening angle, making it optically challenging to collect all the emitted light and use it for the illumination of the LCOS. Additionally, LED light is non-polarized, meaning that 50% of the light will get lost as polarized light is necessary for LCOS illumination.

An alternative is to use a light source with an inherent low etendue, e.g. laser light sources. However, laser illumination has the disadvantage of coherence artefacts, also known as speckle. For reducing speckles, static despeckling devices have been proposed. E.g., US 11275482 B2 mentions a top-hat microlens, a holographic element or an optical grating. Further, despeckling devices switchable between discrete states have been suggested, see e.g. WO 2020/219092 A1. However, static devices or such devices that can only enter a limited number of discrete states do not reduce the speckles significantly or sufficiently.

US 2014/0055755 A1 shows an image projector including a laser light source for displaying light and a diffusing screen coupled to an in-plane vibrator. A dichroic combiner cube combines light beams from a red, a blue and a green laser diode into a combined, single light beam. The diffusing screen is positioned to receive the single light beam and phase-modulate it. The purpose of this is to wash the viewed speckle pattern away. Since the human eye has a limited frame rate and exposure time (i.e. about 20 ms), if enough speckle patterns can be generated in a short period of time, they will average out. However, the approach described in US 2014/0055755 A1 does not reduce the speckle sufficiently, in particular such that it is invisible to the human eye, which requires a speckle contrast below 5%.

It is an objective of the present disclosure to prevent or alleviate at least one of the disadvantages of the prior art. In particular, it is an objective to propose an optical device for providing illumination of an area with a reduced speckle contrast, in particular when using a coherent light source.

This is achieved by an optical device for providing illumination of an area, comprising:
- a despeckling device configured for dynamically and continuously altering beam paths and/or phases of light beams incident on the despeckling device,
- a multi-beam optical element configured for emitting at least two light beams at the despeckling device upon coupling of light into the multi-beam optical element,
   wherein each one of the at least two light beams is emitted by the multi-beam optical element from a position, which differs (i.e. is displaced) from the positions from which the respective other ones of the at least two light beams are emitted by the multi-beam optical element,
   wherein the at least two light beams are emitted such that each one of the at least two light beams at least partially overlaps with at least another one of the at least two light beams at the area to be illuminated.

Upon coupling of light into the multi-beam optical element, it emits at least two light beams from different positions at the despeckling device. The despeckling device dynamically and continuously alters the beam paths and/or phases of these light beams. After having been manipulated by the despeckling device, the at least two light beams illuminate the area such that each one of the at least two light beams overlaps with another one at least partially. Thus, light beams having propagated to the despeckling element along different beam paths illuminate the area and at least partially overlap on the area. The speckle will be formed by interference between the at least two light beams in so far as pairs of light beams are overlapping. Due to their propagation on different beam paths to the despeckling device, the at least two light beams may in particular be subjected to alterations that change differently in time. Due to the propagation on different beam paths to the despeckling device of light beams of the at least two light beams illuminating a particular point of the area, the point of the area may in particular be illuminated by light beams that are subjected to alterations of the beam paths and/or phases that change differently in time at least temporarily. Thus, the variation in the generated speckle patterns may be further increased, leading to a further reduced speckle contrast. Optionally, the active area of the despeckling device may correspond to the active area of the display element. The contrast ratio of speckles of a number of N beams is proportional to 1/sqrt(N). Using a number of discrete states as mentioned above in the context of the prior art thus only allows a limited reduction of the speckle contrast ratio. In contrast, dynamically and continuously changing the beam path or phase of the light beams (corresponding essentially to an uncountable set of light beams) achieves a significant reduction of the speckle contrast, which is further improved by the use of at least two light beams (emitted from different positions).

Under dynamically and continuously altering the beam paths and/or phases of incident light beams it is understood that the alteration to the beam paths and/or phases changes with time and that the set of achievable alterations is an uncountable set, in particular that the alteration changes by arbitrarily small variations with time (e.g. the alternating parameter may be differentiable with time). In particular, altering the beam paths comprises altering the direction and/or the angle and/or the optical path length of the respective light beam.

In particular, the multi-beam optical element is configured for emitting at least a first light beam and a second light beam at the despeckling device upon coupling of light into the multi-beam optical element,
wherein the first light beam is emitted by the multi-beam optical element from a first position, which is displaced from a second position from which the second light beam is emitted by the multi-beam optical element,
wherein the first light beam and the second light beam are emitted such that the first light beam at least partially overlaps with the second light beam at the area to be illuminated.

Optionally, the area to be illuminated comprises a number of regions, which together make up the area to be illuminated and each region is illuminated by at least two of the at least two light beams. Optionally, the at least two light beams are emitted such that each one of the at least two light beams at least partially overlaps with at least another one of the at least two light beams at the area to be illuminated and is at least partially (optionally completely) non-overlapping with said at least another one of the at least two light beams at the despeckling device. Optionally, the despeckling device alters the beam paths and/or phases of light beams incident on the despeckling device from different directions and/or at different locations of the despeckling device in a different way, at least for some period of time. Optionally, the despeckling device alters beam paths and/or phases of light beams incident on the despeckling device from directions and/or at locations at the despeckling device, which direction and/or locations differ by an arbitrarily small but non-zero variation, by an arbitrarily small but non-zero variation for at least some period of time. Optionally, the despeckling device alters beam paths and/or phases of light beams incident on the despeckling device from adjacent directions and/or at adjacent locations on the despeckling by a different variation for at least some period of time. Optionally, the despeckling device comprises a surface, upon which the light beams are incident, wherein light beams incident on different but adjacent surface regions are subjected to variations that differ by a non-zero amount for at least some period of time.

Optionally, the multi-beam optical element comprises at least one input for light and/or at least one output for each of the at least two light beams. Optionally, each one of the at least two light beams is propagated in the multi-beam optical element along a well-defined optical path. This allows to improve the etendue. Optionally, the multi-beam optical element is configured such that more than one beam per color enters the despeckling device. From the despeckling device, the light propagates to the area to be illuminated. The at least two light beams comprise a number of optionally at least 10, further optionally at least 100, further optionally at least 1000, light beams.

Optionally, the optical device further comprises a diffuser arranged in the beam paths of the at least two light beams emitted by the multi-beam optical element upon coupling of light into the multi-beam optical element. The diffuser hides the beam grid (formed by the at least two light beams emitted by the multi-beam optical element from different positions) from a viewer and prevents the viewer from focusing on the emission points of the at least two light beams. The diffuser is preferably a low angle diffuser, such that the etendue is not too much affected. Preferably, the diffuser increases the beam divergence by less than 15°, more preferably by less than 10°, even more preferably by less than 5°. Optionally, the multi-beam optical element is configured for emitting the at least two light beams such that each one of the at least two light beams are (already) at least partially overlapping with at least another one of the at least two light beams at the diffuser (in particular a surface of the diffuser). The diffuser may comprise the area to be illuminated. The diffuser may be arranged such that each of the at least two light beams passes the diffuser twice.

Optionally, the diffuser is arranged in the beam paths of the at least two light beams emitted by the multi-beam optical element upon coupling of light into the multi-beam optical element optically between the despeckling device and the multi-beam optical element. In this way, the diffuser can be further away from positions from which the at least two beams are emitted by the multi-beam optical element and consequently it is easier to hide the beam grid from the viewer (i.e. a lower angular diffusion is required, which is beneficial for the etendue). Optionally, the diffuser is (alternatively or also) arranged in the beam paths of the at least two light beams optically between the despeckling device and the area to be illuminated.

Depending on an image to be displayed by a display device, some pixels may need to be black and do not need to be illuminated. Further, the image content shown e.g. in AR goggles is typically sparse, meaning that only a fraction of pixels are active at any given time. For self-emissive displays this leads to a reduction in energy consumption, because only the active pixel will consume energy. For displays with (joint) front/back illumination of the whole display element (e.g. LCOS or LCD), the illumination typically has to be always on, independent of the image content, leading to unwanted high power consumption. It is a further objective of the present disclosure to provide an optical device for providing illumination of an area, wherein the power consumption can be reduced in case a subregion of the area does not require illumination all the time, and/or to improve the achievable contrast ratio.

This is achieved in that, optionally, the multi-beam optical element is configured for coupling of light into the multi-beam optical element from a first external light source and from a second external light source such that light coupled into the multi-beam optical element from the first external light source provides a first subset of the at least two light beams emitted by the multi-beam optical element and light coupled into the multi-beam optical element from the second external light source provides a second subset of the at least two light beams distinct from the first subset,
wherein the first subset illuminates a first subarea of the area to be illuminated and the second subset illuminates a second subarea of the area to be illuminated, wherein the first subarea and the second subarea are at least partially non-overlapping. In this way, the subareas can (at least partially) be illuminated by different external light sources, such that one of the external light sources can be switched off or its power reduced if illumination of the respective subarea is not required, enabling dynamic beam steering. Optionally, this can be applied to further external light sources. I.e., optionally, the multi-beam optical element is configured for coupling of light into the multi-beam optical element from a plurality of external light sources such that light coupled into the multi-beam optical element each one of the plurality of external light sources provides a respective subset of the at least two light beam emitted by the multi-beam optical element, wherein the subsets are distinct from each other,
wherein each subset illuminates a respective subarea of the area to be illuminated, wherein each subset is at least partially non-overlapping with the other subsets. Preferably, the plurality of external light sources is at least 9 (e.g. a 3x3 grid). This allows the use of a larger number of external light sources for illuminating the area, thereby achieving better brightness.

Alternatively or additionally, local dimming/dynamic beam steering can also be achieved for individual external light sources. Optionally, the multi-beam optical element is configured for coupling of light into the multi-beam optical element from a number of (at least one) external light sources such that light coupled into the multi-beam optical element from each one of the number of external light sources provides a plurality of subsets of the at least two light beams emitted by the multi-beam optical element, wherein the subsets belonging to a respective one of the number of external light sources are distinct from each other, wherein the multi-beam optical element is configured for selectively reducing the power of one, more or all of the subsets belonging to each one of the number of external light sources. Optionally, each subset illuminates a respective subarea of the area to be illuminated, wherein each subset is non-overlapping with the other subsets belonging to the respective one of the number of external light sources.

Optionally, the multi-beam optical element comprises:
- a bus waveguide for receiving light coupled into the multi-beam optical element,
- at least two fan-out waveguides associated with the bus waveguide, wherein each of the at least two fan-out waveguides associated with the bus waveguide is arranged for providing one of the at least two light beams to be emitted by the multi-beam optical element, wherein for each of the at least two fan-out waveguides associated with the bus waveguide there is provided for a fan-out optical coupler for coupling light from the bus waveguide to the respective one of the at least two fan-out waveguides associated with the bus waveguide. In this way, light can easily be distributed to provide the at least two light beams emitted by the multi-beam optical element. Optionally, the number of fan-out waveguides associated with the bus waveguide is at least ten. Optionally, at least one fan-out optical coupler comprises an adjustment structure for adjusting a proportion of light coupled from the bus waveguide to the respective fan-out waveguide, wherein optionally as the adjustment structure there is provided for an interferometric structure, wherein a section of the bus waveguide forms a first arm of the interferometric structure and a section of the fan-out waveguide forms a second arm of the interferometric structure, wherein the first arm and/or the second arm comprise(s) a phase shifter. This allows dynamic beam steering.

Optionally, the bus waveguide is a first bus waveguide,
wherein the multi-beam optical element further comprises:
- a second bus waveguide for receiving light coupled into the multi-beam optical element,
- at least two fan-out waveguides associated with the second bus waveguide wherein each of the at least two fan-out waveguides associated with the second bus waveguide is arranged for providing one of the at least two light beams to be emitted by the multi-beam optical element, wherein for each of the at least two fan-out waveguides associated with the second bus waveguide there is provided for a fan-out optical coupler for coupling light from the second bus waveguide to the respective one of the at least two fan-out waveguides associated with the second bus waveguide. In this way, distribution is facilitated. E.g., the bus waveguides can extend alongside each other at least for a section. In this way, distribution is facilitated. E.g., the bus waveguides can extend alongside each other at least for a section.

Optionally, the multi-beam optical element comprises:
- a number of further bus waveguides for receiving light coupled into the multi-beam optical element,
- at least two fan-out waveguides associated with each one of the number of further bus waveguides, wherein each of the at least two fan-out waveguides associated with each one of the number of further bus waveguides is arranged for providing one of the at least two light beams to be emitted by the multi-beam optical element, wherein for each of the at least two fan-out waveguides associated with each one of the number of further bus waveguides there is provided for a fan-out optical coupler for coupling light from the respective one of the number of further bus waveguides to the respective one of the at least two fan-out waveguides associated with the respective one of the number of further bus waveguides. The number of further bus waveguides is preferably larger than ten.

Optionally, the (first) bus waveguide, the second bus waveguide and/or each of the number of further bus waveguides is coupled to a light source each.

Optionally the multi-beam optical element further comprises
- a primary waveguide for receiving light coupled into the multi-beam optical element,
- a first bus optical coupler for coupling light from the primary waveguide to the first bus waveguide,
- a second bus optical coupler for coupling light from the primary waveguide or the first bus waveguide to the secondary bus waveguide. This allows to easily distribute light from a single waveguide (or small number of waveguides) to a larger number of bus waveguides and consequently fan-out waveguides. The distribution can occur from the primary waveguide directly to all bus waveguides; or from the primary waveguide to the first bus waveguide and from the first bus waveguide to the second bus waveguide and from the second bus waveguide to a further waveguide and so on; or in a different structure. The primary waveguide may also have the characteristics of a bus waveguide, i.e. optionally the multi-beam optical element further comprises at least two fan-out waveguides associated with the primary waveguide, wherein each of the at least two fan-out waveguides associated with the primary waveguide is arranged for providing one of the at least two light beams to be emitted by the multi-beam optical element, wherein for each of the at least two fan-out waveguides associated with the primary waveguide there is provided for a fan-out optical coupler for coupling light from the primary waveguide to the respective one of the at least two fan-out waveguides associated with the primary waveguide. Optionally, a light source is coupled to the primary waveguide.

Optionally, the first bus optical coupler comprises an adjustment structure for adjusting a proportion of light coupled from the primary waveguide to the first bus waveguide,
wherein optionally as the adjustment structure there is provided for an interferometric structure, wherein a section of the primary waveguide forms a first arm of the interferometric structure and a section of the first bus waveguide forms a second arm of the interferometric structure, wherein the first arm and/or the second arm comprise(s) a phase shifter. In this way, the power of the light beams emitted by the fan-out waveguides associated with the first bus waveguide can be adjusted. This allows dynamic beam steering, i.e. light can be guided to the zones of the multi-beam optical element where it is required, and power savings, when the subarea illuminated by the fan-out waveguides associated with the first bus waveguide does not need (full) illumination. The interferometric structure optionally comprises a Mach-Zehnder interferometric structure. Further optionally, the second bus optical coupler comprises an adjustment structure for adjusting a proportion of light coupled from the primary waveguide or the first bus waveguide to the second bus waveguide. Preferably, the subarea illuminated by the light beams provided by the first bus waveguide and the subarea illuminated by the light beams provided by the second bus waveguide are at least partially non-overlapping.

Optionally, the multi-beam optical element further comprises:
- a first bus set configured for receiving light from a first external light source, the first bus set comprising the bus waveguide and the at least two fan-out waveguides associated with the bus waveguide and
- a second bus set configured for receiving light from a second external light source different from the first external light source, comprising:
   - a bus waveguide of the second bus set,
   - at least two fan-out waveguides associated with the bus waveguide of the second bus set, wherein each of the at least two fan-out waveguides associated with the bus waveguide of the second bus set is arranged for providing one of the at least two light beams to be emitted by the multi-beam optical element, wherein for each of the at least two fan-out waveguides associated with the bus waveguide of the second bus set there is provided for a fan-out optical coupler for coupling light from the bus waveguide of the second bus set to the respective one of the at least two fan-out waveguides associated with the bus waveguide of the second bus set. The different bus sets can for example be used for illuminating the area with different colors, in particular in field sequential color mode, i.e. the color information is transmitted in successive provision of individual colors, which are fused by the human vision system into a color picture. Optionally, the device comprises the first external light source and the second external light source. Optionally, the first external light source and the second external light source are configured for emitting light of a different wavelength, in particular a different color. Optionally, the subarea illuminated by the light beams emitted by the second bus set is substantially overlapping with the subarea illuminated by the light beams emitted by the first bus set. Optionally, the optical device comprises a third bus set, with the same characteristics as the second bus set, e.g. for a third color. Optionally, each bus set comprises further bus waveguides.

Optionally, the multi-beam optical element further comprises a transparent substrate. Optionally, the bus waveguide is at least partially provided in the transparent substrate and the at least two fan-out waveguides are provided in the transparent substrate. Optionally the bus waveguide and the at least two fan-out waveguides are provided in the transparent substrate by femtosecond direct laser writing. Optionally, also one, some or all of the other waveguides mentioned in this disclosure are at least partially provided in the transparent substrate, in particular the second bus waveguide and its associated fan-out waveguides, the further bus waveguides and its associated fan-out waveguides, and/or the primary waveguide. Optionally, the substrate has a boundary surface and the fan-out waveguides (associated with the (first) bus waveguide, the second bus waveguide and/or the further bus waveguides) bend towards the boundary surface of the transparent substrate.

Optionally, the transparent substrate comprises glass, in particular borosilicate glass, e.g. an alumino-borosilicate glass or an alkaline earth boro-aluminosilicate glass type. Optionally, the substrate comprises a Corning EAGLE XG (R), which is an alkaline earth boro-aluminosilicate glass type, with a refractive index of ca. 1.5 (in the visible range). Optionally, the transparent substrate has a refractive index of 1.5 in the visible range, e.g. of 1.5185 at 450 nm, of 1.5134 at 520 nm and/or of 1.5080 at 638 nm.

Femtosecond direct laser writing (FDLW, often also called femtosecond laser direct inscription) optionally comprises one or more of the following step:
- provide for a substrate, which comprises a transparent dielectric material and/or which comprises glass, ceramic, polymer and/or crystalline material;
- use multiphoton (i.e. more than 2-photon) absorption of photons with energies below the bandgap of the material of the substrate and/or wherein the pulses are femtosecond pulses at low to medium frequencies, e.g. between 20 kHz and 10 MHz, optionally between 80 kHz and 5 MHz in particular between 100 kHz and 2 MHz and even more particularly between 500 kHz and 1.5 MHz, and/or wherein the pulses have a medium pulse width, e.g. between 40 fs and 2 ps, optionally between 100 fs and 1 ps, in particular between 200 fs and 400 fs.

Another technique of laser writing that may be used for providing the waveguides in the transparent substrate is 2PP (2-photon polymerisation) laser writing, which may comprise two photon lithography or multiphoton lithography. In contrast to femtosecond direct laser writing, it may contain one or more of the following steps or properties:
- use femtosecond pulses at typically high frequencies, e.g. 80 MHz and with low pulse width < 100 fs;
- two-photon absorption is a third-order process with respect to the third-order susceptibility and a second-order process with respect to light intensity;
- provide for a special resist (a photosensitive material) that is highly transparent to photons of wavelength lambda but highly absorptive for photons of wavelength lambda/2.

Optionally, the multi-beam optical element comprises further primary waveguides, associated bus waveguides and associated fan-out waveguides. In this way, a larger number of light sources can be used for illuminating the area, thereby achieving a better brightness.

Optionally, the multi-beam optical element (in particular the transparent substrate) comprises an optical structure and the fan-out waveguides (associated with the (first) bus waveguide, the second bus waveguide and/or the further bus waveguides) bend towards the boundary surface such that they direct the light beams emitted from the fan-out waveguide at the optical structure. Optionally, the optical structure comprises a reflection interface for reflecting the light beams directed at the optical structure by the fan-out waveguides. In particular (if the optical structure is provided outside the transparent substrate), the reflection interface reflects the light beams emitted by the fan-out waveguides towards the transparent substrate, in particular towards the boundary surface of the substrate. Alternatively or additionally, the optical structure comprises a transmission interface (different from the boundary surface of the substrate), arranged such that the light beam directed at the optical structure is emitted from the transmission interface.

Optionally, the optical structure comprises for each fan-out waveguide (associated with the (first) bus waveguide, the second bus waveguide and/or the further bus waveguides) an optical redirecting element associated with the respective fan-out waveguide, wherein each fan-out waveguide is configured for emitting the light beam at the respective optical redirecting element. Optionally, each optical redirecting element directs the light beam emitted at the optical redirecting element by the respective fan-out waveguide at the despeckling device. The optical redirecting elements may also shape the respective beam. In particular, the optical redirecting elements are configured for collimating the light beam. The optical redirecting elements may reduce the divergence angle (e.g. to less than 1°), they may leave the divergence angle unchanged or they may widen the divergence angle (e.g. to more than 20°). Optionally, the optical redirecting element comprise a lens for collimating the respective light beam.

Optionally, the transparent substrate is arranged such that the light beams emitted by the multi-beam optical element upon coupling of light into the multi-beam optical element pass through the transparent substrate after interaction with the despeckling device. This allows a particularly compact size. The at least two light beams may pass through the transparent substrate non-parallel to the at least two light beams emitted by the multi-beam optical element. Optionally, the optical device is arranged such that the light beams pass through the optical structure such that the light beams avoid the optical redirecting elements and/or such that the light beams' paths are not altered by the optical redirecting elements and/or such that the beams' paths are deflected by less than 10°, optionally less than 5°. Optionally, the multi-beam optical element comprises for each of the at least two light beams reflected by the despeckling element an optical deflecting element for directing the respective light beam at the area to be illuminated and/or for deflecting the light beam such that its beam path is substantially perpendicular to the boundary surface of the transparent substrate or to a surface of the transparent substrate opposite the boundary surface. Optionally, each optical redirecting element is combined with an optical deflecting element; i.e. each optical redirecting element is configured for (also) adjusting the path of a respective light beam after reflection from the despeckling device.

Optionally, the despeckling device comprises a mirror for reflecting the at least two light beams emitted by the multi-beam optical element upon coupling of light into the multi-beam optical element and a deflecting device for providing a continuous variation of a position of surface points of the mirror. In this way, the beam paths and/or angles of the light beams impinging on the despeckling device can be dynamically and continuously altered. Optionally, at least some surface points of the mirror are subjected to different variations in their positions for at least some time periods. Optionally, the deflecting device is configured for providing a periodic continuous variation of the position of the surface points of the mirror. Optionally, the deflecting element subjects the mirror to a movement or vibration, in particular a vibration at least partially in a direction parallel to the optical axes of the beams incident on the mirror.

The despeckling device may comprise a number of separate (in particular tiled) despeckling elements, wherein each is arranged for despeckling a subset of the at least light beams. E.g., each of the despeckling elements may comprise a mirror and a deflecting device.

Optionally the deflecting device is configured for continuous (in particular periodic, i.e. one side back-and-forth) tilting of the mirror. In this way, the deflecting device continuously alters the angle of the light beam (and to some degree the optical path length). Optionally, the despeckling device comprises a MEMS tilting mirror, i.e. optionally the mirror and the deflecting device form a MEMS tilting mirror.

Optionally, the deflecting device is configured for inducing surface waves on a surface of the mirror (i.e. the surface, upon which the at least two light beams impinge). Optionally, the deflecting device comprises a Dyoptyka mirror. Optionally, the mirror is deformable.

Optionally, the optical device is a backlight or frontlight device. Optionally, the optical device comprises at least one laser light source for providing light for coupling into the multi-beam optical element, in particular for coupling light into the primary waveguide, the (first) bus waveguide and/or the second bus waveguide. Optionally, the optical device comprises the external light source(s) mentioned in this disclosure, which is/are preferably (a) laser light source(s). The laser light source(s) has/have a coherence length of optionally less than 2 mm, further optionally of less than 500 µm. A low coherence length is beneficial such that the ability of the at least two light beams to interfere with each other is low. The at least two light beams have a coherence length of optionally less than 2 mm, further optionally of less than 500 pm. Laser (diode) to waveguide coupling can e.g. be achieved via a microlens (e.g. glued on a facet of the transparent substrate) or via tapering waveguides.

Optionally, the optical device is a display device or projection device. Optionally, the optical device comprises a display element, optionally a reflective or transmissive display element, in particular an LCOS-panel, an LCD-panel or a DLP-panel, wherein the at least two light beams emitted by the multi-beam optical element upon coupling of light into the multi-beam optical element are propagated to the display element, wherein the display element comprises the area to be illuminated. Optionally, the display element comprises a plurality of pixel elements (in particular for changing a polarization of incident light dependent on an image to be displayed), wherein each of the at least two light beams illuminates more than one of the plurality of pixel elements (i.e. there is flooding illumination). Optionally, each of the plurality of pixel elements is illuminated by more than one of the at least two light beams.

Optionally, the optical device comprises a polarizing beam splitter arranged for passing or blocking light beams emanating from the display element dependent on a current pixel state of the display element. Optionally, the polarizing beam splitter is also arranged in the path of the at least two light beams emitted by the multi-beam optical element between the multi-beam optical element and the despeckling device. I.e. optionally, the polarizing beam splitter directs the at least two light beams emitted by the multi-beam optical element at the despeckling device.

The fan-out optical couplers are optionally directional couplers and/or couple via the evanescent field. The (first and/or second) bus optical coupler is optionally a directional coupler and/or couple via the evanescent field. The (first and/or second) bus waveguide, the fan-out waveguides and/or the primary waveguide are optionally SiN waveguides.

Reference in this disclosure to light beams being emitted, propagated etc. refers to the light beams being emitted, propagated etc. upon coupling of light into the optical device (i.e. during use), in particular the multi-beam optical element.

By way of example, the disclosure is further explained with respect to some selected embodiments shown in the drawings. However, these embodiments shall not be considered limiting for the disclosure.
Fig. 1 schematically shows an exemplary embodiment of an optical device for providing illumination of an area, in particular an AR projector.
Fig. 2 schematically shows another exemplary embodiment of the optical device for providing illumination of an area, in particular an AR projector.
Fig. 3 schematically shows a first exemplary embodiment of a multi-beam optical element.
Fig. 4 schematically shows a second exemplary embodiment of the multi-beam optical element.
Fig. 5 schematically shows a third exemplary embodiment of the multi-beam optical element.
Fig. 6 schematically shows a fourth exemplary embodiment of the multi-beam optical element in a top view.
Fig. 7 schematically shows the fourth exemplary embodiment of the multi-beam optical element in a side view.
Fig. 8 schematically shows yet another exemplary embodiment of the optical device for providing illumination of an area, in particular for VR applications.
Fig. 9a shows a Zemax graph of yet another exemplary embodiment of the optical device.
Fig. 9b shows a detailed view from Fig. 9a.
Fig. 9c shows a detailed view from Fig. 9b.
Fig. 9d shows the incoherent irradiance of the far-field of the graph shown in Fig. 9a.
Fig. 10a shows an image projected by an AR projector generated using a single laser and no despeckling.
Fig. 10b shows an image projected by an AR projector generated using a single laser despeckled by a MEMS mirror.
Fig. 10c shows an image projected by an AR projector generated using a plurality of laser beams and no despeckling.
Fig. 10d shows an image projected by an AR projector generated using a plurality of laser beams despeckled by a MEMS mirror.
Fig. 11a shows an image projected by an AR projector generated using a single laser and no despeckling.
Fig. 11b shows an image projected by an AR projector generated using a single laser despeckled by a MEMS mirror.
Fig. 11c shows an image projected by an AR projector generated using a plurality of laser beams and no despeckling.
Fig. 11d shows an image projected by an AR projector generated using a plurality of laser beams despeckled by a MEMS mirror.

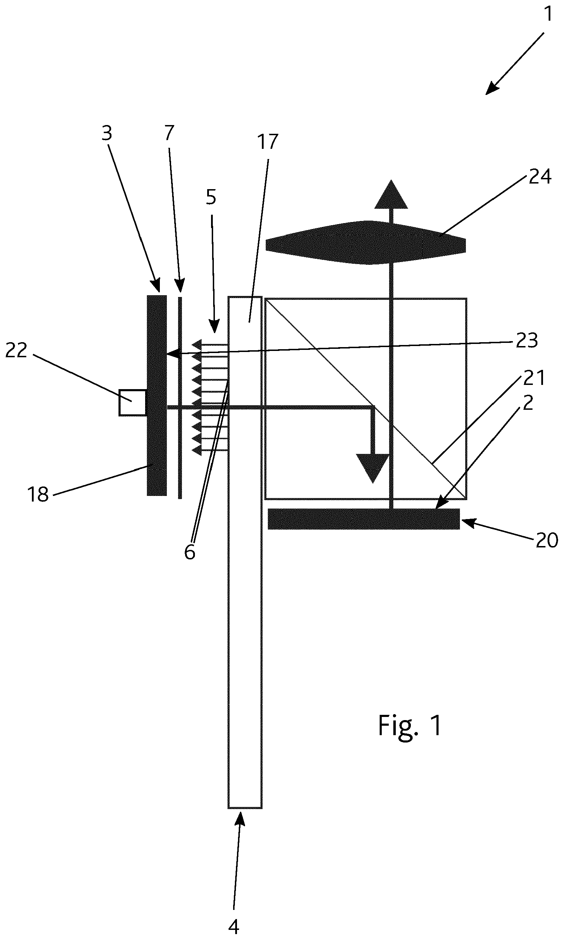

Fig. 1 schematically shows an exemplary embodiment of an optical device 1 for providing illumination of an area 2. The optical device comprises a despeckling device 3 configured for dynamically and continuously altering beam paths and/or phases of light beams incident on the despeckling device 3. The optical device 1 further comprises a multi-beam optical element 4 configured for emitting at least two light beams 5 at the despeckling device upon coupling of light into the multi-beam optical element 4. Light may be coupled into the multi-beam optical element 4 e.g. at the bottom of the element in Fig. 1. Each one of the at least two light beams 5 is emitted by the multi-beam optical element 4 from a position 6, which differs from the positions 6 from which the respective other ones of the at least two light beams 5 are emitted by the multi-beam optical element 4. The at least two light beams 5 are emitted such that each one of the at least two light beams 5 at least partially overlaps with at least another one of the at least two light beams 5 at the area 2 to be illuminated. (The light beams 5 are only drawn schematically, i.e. their beam divergence angle is not shown.)

Due to their propagation on different beam paths to the despeckling device, the at least two light beams 5 are at least partially subjected to a different alteration of the beam paths and/or phases by the despeckling device 3. Thus, the variation in the generated speckle patterns is increased, leading to a reduced speckle contrast.

The present invention further comprises a diffuser 7 arranged in the beam paths of the at least two light beams 5 emitted by the multi-beam optical element 4 upon coupling of light into the multi-beam optical element 4. The diffuser 7 acts to hide the beam pattern of the at least two light beams 5 as emitted by the multi-beam optical element 4 from a viewer. In this embodiment, the diffuser 7 is arranged in the beam paths of the at least two light beams 5 emitted by the multi-beam optical element 4 upon coupling of light into the multi-beam optical element 4 optically between the despeckling device 3 and the multi-beam optical element 4.

The despeckling device 3 comprises a mirror 18 for reflecting the at least two light beams 5 emitted by the multi-beam optical element 4 upon coupling of light into the multi-beam optical element 4. Further the despeckling device 3 comprises a deflecting device 22 for providing a continuous variation of a position of surface points of the mirror 18. E.g., the deflecting device 22 may comprise a MEMS, for example a tilting device, configured for continuous tilting of the mirror 18. For example, the continuous tilting may be a periodical actuation within less than 2° at about 100 Hz achievable with a MEMS having 5 mm diameter. The deflecting device 22 could (alternatively or additionally) be configured for inducing surface waves on a surface 23 of the mirror 18.

In this embodiment, the multi-beam optical element 4 comprises a transparent substrate 17. For achieving a compact layout, the at least two light beams 5 emitted by the multi-beam optical element 4 are reflected by the despeckling element 3 in the direction of the multi-beam optical element 4 and pass through the transparent substrate 17 of the multi-beam optical element 4.

Further in this embodiment, the optical device 1 is a projection device (e.g. an AR projector) and comprises a display element 20, in particular a reflective display element, e.g. an LCOS panel. The at least two light beams 5 emitted by the multi-beam optical element 4 upon coupling of light into the multi-beam optical element 4 are propagated to the display element 20, which comprises the area 2 to be illuminated. There is provided for a polarizing beam splitter 21 arranged for passing or blocking light beams emanating from the display element 21 dependent on a current pixel state of the display element 21. Light beams transmitted through the polarizing beam splitter 21 are propagated to a projector lens 24, which projects an image on a (transparent) screen (not shown). Thus, the optical device 1 may be used as an AR device in this embodiment.

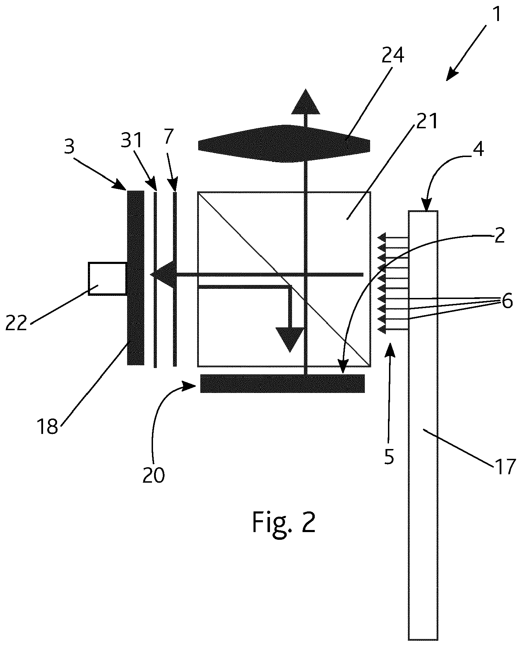

Fig. 2 schematically shows another embodiment of the optical device 1. This embodiment is similar to the embodiment shown in Fig. 1, such that only the differences will be explained and features corresponding to the features shown in Fig. 1 have been provided with the same reference numerals.

In this embodiment, the polarizing beam splitter 21 is placed between the multi-beam optical element 4 and the despeckling device 3. I.e., the at least two light beams 5 emitted by the multi-beam optical device 4 pass through the polarization beam splitter 21 and the diffuser 7. In contrast to the embodiment of Fig. 1, there is provided for a quarter-wave plate 31 in the path of the at least two light beams 5 between the diffuser 7 and the despeckling device 3. The quarter-wave plate 31 ensures the rotation of the polarization of the at least two light beams 5, such that the at least two light beams 5 (after reflection at the mirror 18 and passing the quarter-wave plate 31 and the diffuser 7 again) are reflected at the polarization beam splitter 21 at the display element 20. Dependent on the pixel state of the display element 20, the light beams subsequently traverse the polarization beams splitter 21 and are propagated to the projection lens 24 or not.

Thus, in this embodiment the at least two light beams 5 do not pass through the transparent substrate 17 after interacting with the despeckling device 3.

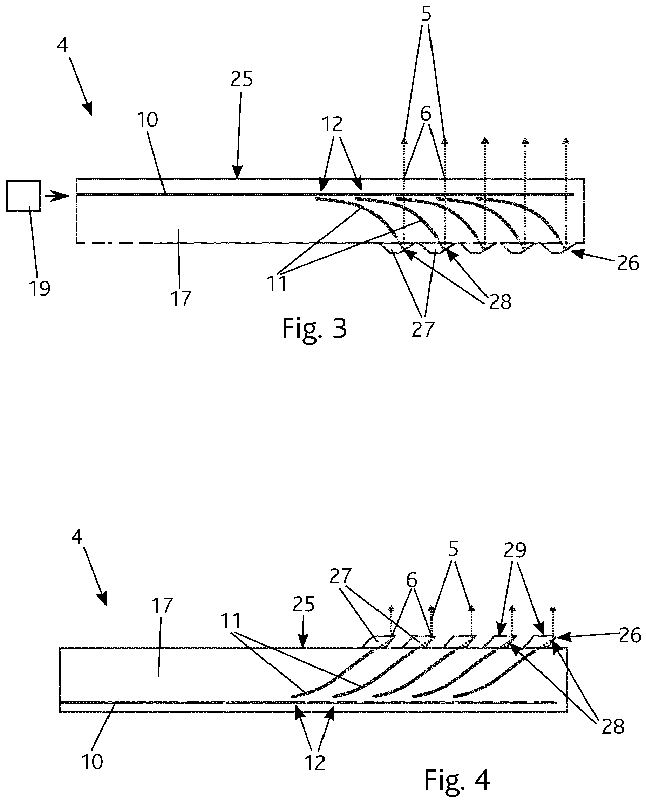

Fig. 3 schematically shows a first exemplary embodiment of the multi-beam optical element 4, comprising a transparent substrate 17. The multi-beam optical element 4 comprises a bus waveguide 10 for receiving light coupled into the multi-beam optical element 4. Fig. 3 also shows a laser light source 19 for coupling light into the multi-beam optical element 4, in particular into the bus waveguide 10. The multi-beam optical element 4 at least two fan-out waveguides associated with the bus waveguide 10, For each of the at least two fan-out waveguides 11 associated with the bus waveguide 10 there is provided for a fan-out optical coupler 12 for coupling light from the bus waveguide 10 to the respective one of the at least two fan-out waveguides 11 associated with the bus waveguide 10. Thus, light from the laser light source 19 is distributed to the at least two fan-out waveguides 11.

The bus waveguide 10 and the at least two fan-out waveguide 11 are provided in the transparent substrate 17. The substrate has a boundary surface 25 and the at least two fan-out waveguides 11 associated with the bus waveguide 10 bend towards the boundary surface 25 of the transparent substrate 17. The multi-beam optical element 4 further comprises an optical structure 26. The optical structure comprises for each of the at least two fan-out waveguides 11 associated with the bus waveguide 10 an optical redirecting element 27, wherein each of the at least two fan-out waveguides is configured for emitting the respective light beam at the respective optical redirecting element 27. Each optical redirecting element 27 comprises a reflection interface 28 that reflects the respective light beam emitted by the respective fan-out waveguide 11 back towards the transparent substrate 17, such that the at least two light beams 5 are emitted (in this embodiment substantially vertically) from the transparent substrate 17 at its surface opposite the boundary surface 26.

In conclusion, each of the at least two fan-out waveguides 11 associated with the bus waveguide 10 is arranged for providing one of the at least two light beams 5 via the optical redirecting elements 27 and each one of the at least two light beams 5 is emitted by the multi-beam optical element 4 from a position 6, which differs from the positions 6 from which the respective other ones of the at least two light beams 5 are emitted by the multi-beam optical element 4.

Fig. 4 schematically shows a second exemplary embodiment of the multi-beam optical element 4. This second embodiment is similar to the first embodiment, such that only the differences will be explained and features corresponding to the features of the above mentioned first embodiment have been provided with the same reference numerals as used in the context of the first embodiment.

In contrast to the first embodiment, in this embodiment, the reflection interface 28 of each optical redirecting element 27 does not reflect the light beams back through the substrate 17. Rather, each optical redirecting element 27 also comprises a transmission interface 29 and the reflection interface 28 of the respective optical redirecting element 27 directs the respective light beam 5 at the transmission interface 29, where the respective light beam 5 is emitted from the multi-beam optical element 4. Thus, the light beams 2 are emitted on the boundary surface 25 side of the substrate 17. Again, different ones of the light beams 5 are emitted from different positions 6.

The multi-beam optical element 4 shown in Figs. 3 and 4 could for example be used in the optical device 1 shown in Fig. 1. In this case, it is practical to either emit the light beams 6 slightly slanted (i.e. deviating from 90° to the boundary surface 25) and/or position the despeckling device 3 (in particular the mirror 18) slanted such that light beams 6 reflected from the despeckling device 3 (in particular the mirror 3) avoid the reflection interfaces 28.

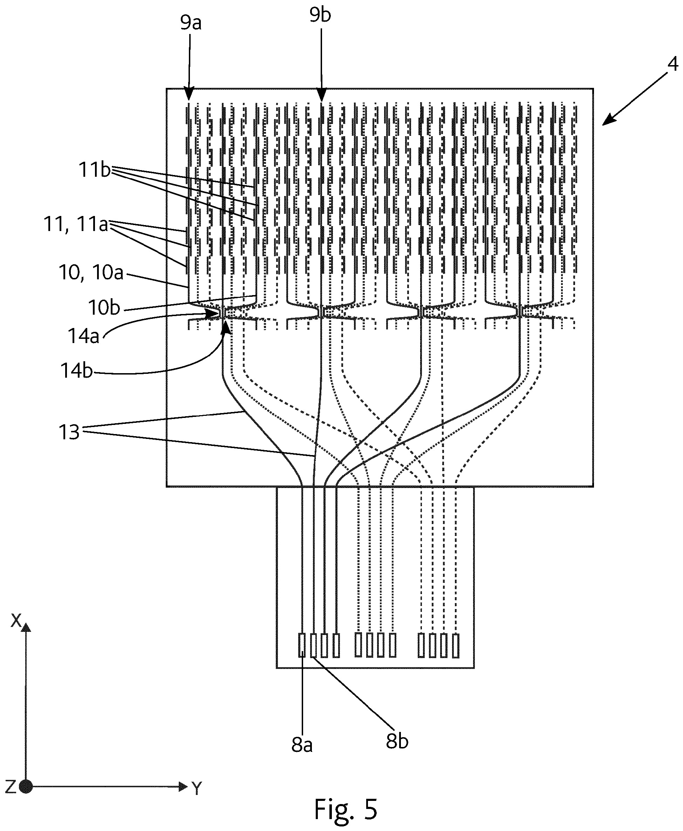

Fig. 5 schematically shows a third exemplary embodiment of the multi-beam optical element 4. Features corresponding to the features of the above mentioned first embodiment have been provided with the same reference numerals as used in the context of the first embodiment.

The multi-beam optical element 4 is configured for coupling of light into the multi-beam optical element 4 from a first external light source 8a, a second external light source 8b and further external light sources (which are also shown in Fig. 5). The light is coupled from each (first, second and further) external light source 8a, 8b into a primary waveguide 13. From each (first, second and further) primary waveguide 13, light is coupled from the respective primary waveguide 13 to a first bus waveguide 10a via a first bus optical coupler 14a, to a second bus waveguide 10b via a second bus optical coupler 14b and to further bus waveguides via further bus optical couplers. Associated with each (first, second and further) bus waveguide 10a, 10b are at least two fan-out waveguides 11, 11a, 11b associated with the respective bus waveguide 10a, 10b. Each of the at least two fan-out waveguides 11, 11a, 11b associated with the respective bus waveguide 10a, 10b is arranged for providing one of the at least two light beams 5, wherein for each of the at least two fan-out waveguides 11, 11a, 11b associated with the respective bus waveguide 10a, 10b there is provided for a fan-out optical coupler 12 for coupling light from the bus waveguide 10 to the respective one of the at least two fan-out waveguides 11, 11a, 11b associated with the respective bus waveguide 10a, 10b. In conclusion each of the at least two light beams 5 is emitted by a fan-out waveguide 11, such that each of the at least two light beams 5 is emitted from a different position 6. The fan-out waveguides 11 can be formed as described in the context of Figs. 3 and 4 and may be associated with optical redirecting elements 27.

The further external light sources, further primary waveguides and associated bus waveguides and fan-out waveguides are not labelled by reference numerals, but are shown in the figure. Further it should be pointed out that crossings between different waveguides are avoided along the Z-axis (vertical to the drawing plane).

It is advantageous if light coupled into the multi-beam optical element 4 from the first external light source 8a provides a first subset 9a of the at least two light beams 5 emitted by the multi-beam optical element 4 and light coupled into the multi-beam optical element 4 from the second external light source 8b provides a second subset 9b of the at least two light beams 5 distinct from the first subset 9a. The first subset 9a illuminates a first subarea of the area 2 to be illuminated and the second subset 9b illuminates a second subarea of the area 2 to be illuminated, wherein the first subarea and the second subarea are at least partially non-overlapping. In this way, the power of the first or second external light source 8a, 8b may be reduced, in case no or reduced illumination of the respective subarea is required.

In this embodiment, the left four external light sources may provide a first color, the middle four external light sources may provide a second color and the right four external light sources may provide a third color, in particular for use of the optical device in field sequential mode.

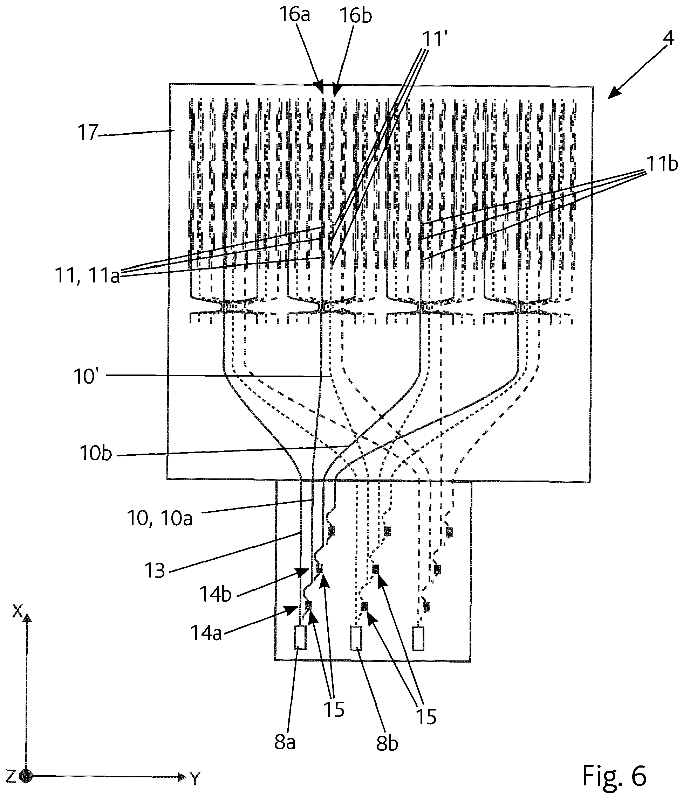

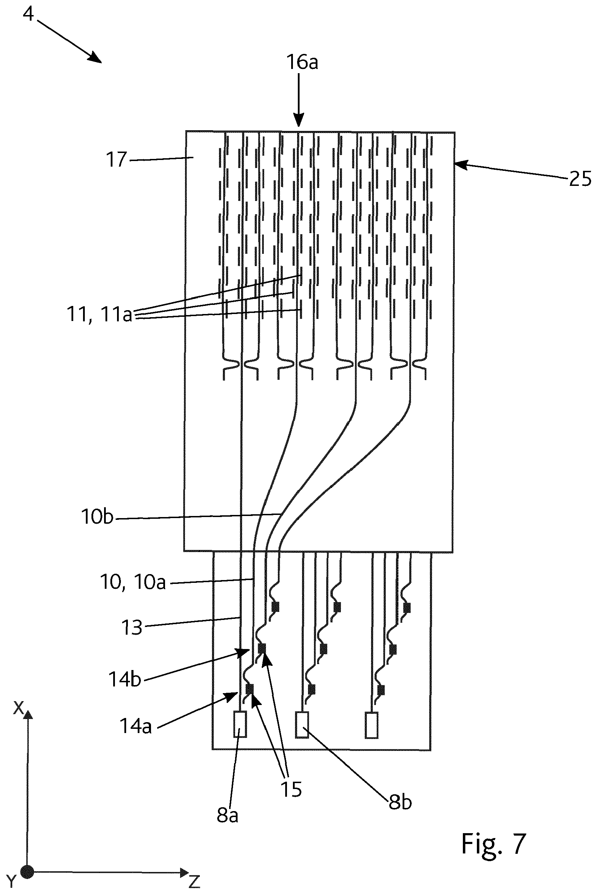

Fig. 6 schematically shows a fourth exemplary embodiment of the multi-beam optical element 4 in a top view. Fig. 7 shows the same embodiment in a side view. Features corresponding to the features of the above mentioned third embodiment have been provided with the same reference numerals as used in the context of the third embodiment.

The fourth embodiment is similar to the third embodiment, so that only the differences will be explained. In this embodiment, the number of external light sources is reduced. E.g., there can be provided for one external light source per color.

In the fourth embodiment, light is coupled from the primary waveguide 13 to the first bus waveguide 10a via the first bus optical coupler 14a and from the first bus waveguide 10a to the second bus waveguide 10b via the second bus optical coupler 14b. The first bus optical coupler 14a comprises an adjustment structure 15 for adjusting a proportion of light coupled from the primary waveguide 13 to the first bus waveguide 10a. Further, the second bus optical coupler 14a comprises an adjustment structure 15 for adjusting a proportion of light coupled from the first bus waveguide 10a to the second bus waveguide 10b. As the adjustment structure 15 of the first bus optical coupler 14a there is provided for an interferometric structure, wherein a section of the primary waveguide 13 forms a first arm of the interferometric structure and a section of the first bus waveguide 10a forms a second arm of the interferometric structure, wherein the first arm and/or the second arm comprise(s) a phase shifter. The other adjustment structures may be formed analogously. The adjustment structures allow to regulate the power transmitted to the respective fan-out waveguides 11, thereby allowing dynamic beam steering for individual external light sources.

The waveguides connected to the second external light source 8b and the further external light source have the same features as those connected to the first external light source 8a.

Further, the multi-beam optical element 4 comprises a first bus set 16a configured for receiving light from the first external light source 8a. The first bus set 16a comprises the bus waveguide 10 and the at least two fan-out waveguides 11 associated with the bus waveguide 10. The multi-beam optical element 4 also comprises a second bus set 16b configured for receiving light from the second external light source 8b different from the first external light source 8a. The second bus set 16 comprises a bus waveguide 10' of the second bus set 16b and at least two fan-out waveguides 11' associated with the bus waveguide 10' of the second bus set 16b. Each of the at least two fan-out waveguides 11' associated with the bus waveguide 10' of the second bus set 16b is arranged for providing one of the at least two light beams 5 to be emitted by the multi-beam optical element 4. For each of the at least two fan-out waveguides 11' associated with the bus waveguide 10' of the second bus set 16b there is provided for a fan-out optical coupler for coupling light from the bus waveguide 10' of the second bus set 16b to the respective one of the at least two fan-out waveguides 11' associated with the bus waveguide 10' of the second bus set 16b. The different bus sets 16a, 16b can for example be used for illuminating the area 2 with different colors, in particular in field sequential color mode.

In the fourth embodiment, further bus waveguides (connected to further fan-out waveguides) are distributed from the primary waveguide 13, the first bus waveguide 10a and the second bus waveguide 10b.

As can be seen from Fig. 7, the waveguides are also spread in the Z-axis to avoid crossings between different waveguides.

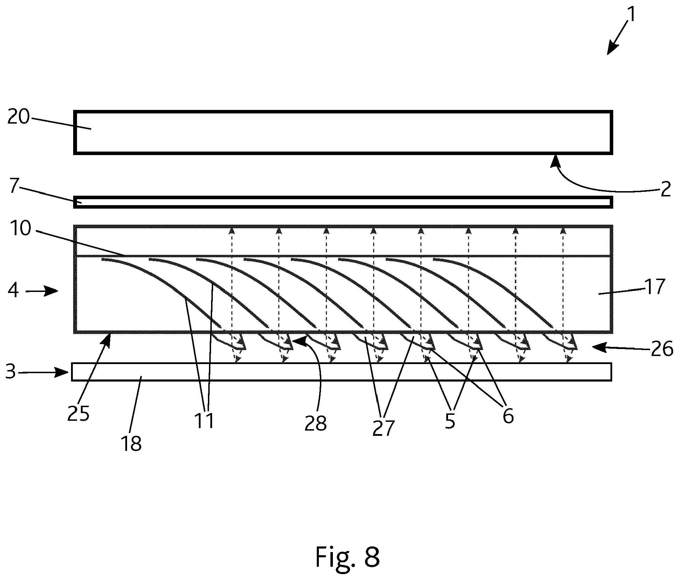

Fig. 8 schematically shows another exemplary embodiment of the optical device 1. This embodiment provides backlighting, e.g. for VR applications. The optical device 1 comprises a multi-beam optical element 4 similar to the one of the second embodiment shown in Fig. 4; however, the at least two light beams 5 are emitted slanted with respect to a boundary surface 25 of the substrate 17. The at least two light beams 5 are emitted at the despeckling device 3, which in this embodiment comprises a mirror 18 for reflecting the at least two light beams 5 emitted by the multi-beam optical element 4 and a deflecting device (not shown) for providing a continuous variation of a position of surface points of the mirror 18. Since for VR applications a larger display element is required, it is preferable, that in this case the deflecting device is configured for inducing surface waves on a surface of the mirror 18. The mirror 18 reflects the light beams 5 back through the transparent substrate 17, avoiding the reflection interfaces 28. The diffuser 7 is in this case arranged between the side of the substrate 17 opposite the boundary surface 25 and the display element 20. I.e., the diffuser 7 is arranged in the beam path of the light beams 7 optically after the despeckling device 3 and the light beams 5 pass through the diffuser after having passed through the substrate 17 a second time.

The optical device 1 of this embodiment is preferably a display device and the display element 20 is a transmissive display element, e.g. and LCD panel.

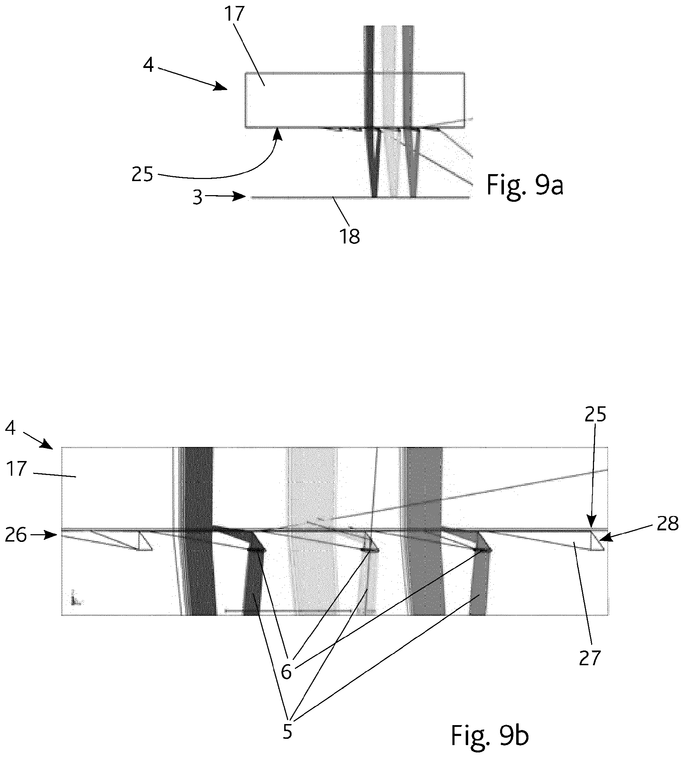

Fig. 9a shows a Zemax graph of yet another exemplary embodiment of the optical device 1 comprising the multi-beam optical element 4 and the despeckling device 3. Features corresponding to the features mentioned above are provided with the same reference numerals as used above. The multi-beam optical element 4 comprises a transparent substrate 17. The multi-beam optical element 4 comprises an optical structure 26. A number of light beams are guided in the transparent substrate 17 to the optical structure 26, wherein only the last section of the light beams in the transparent substrate 17 are shown. The light beams could e.g. be directed by bent waveguides as shown in Fig. 3 and Fig. 4 at the optical structure 26. In this case, the light beams could have different colours.

As can easier be seen in Fig. 9b showing a detailed view of the optical structure 26, the optical structure 26 comprises for each of the light beams a light redirecting element 27, such that each light beam 6 is emitted from a different position 5.

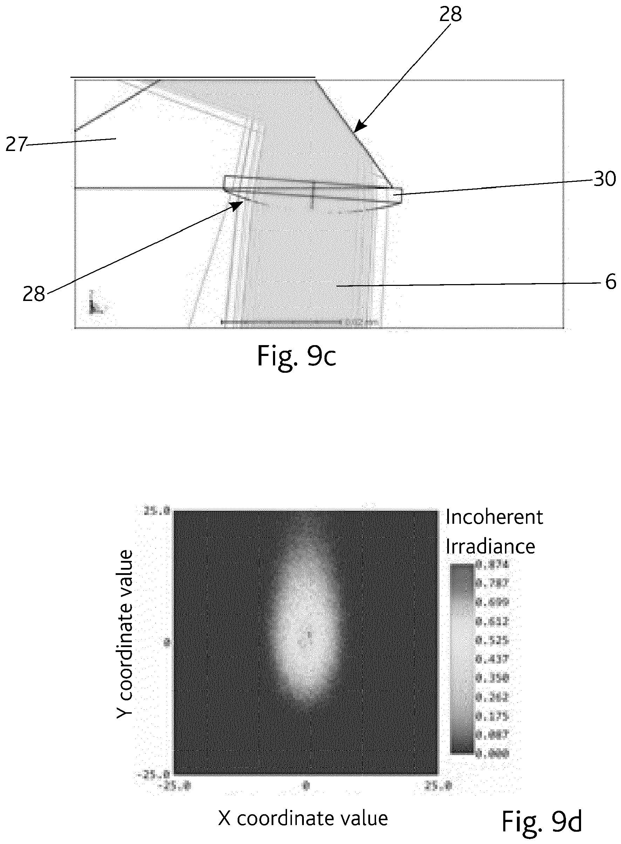

As can easier be seen in Fig. 9c showing a detailed view of one light redirecting element 27, each light redirecting element 7 comprises a reflection interface 28 for reflecting the light beam and a transmission interface 29. The reflection interface 28 reflects the respective light beam and directs the light beams at the transmission interface 29, from where it is emitted. The light redirecting features 27 further comprise a lens 30, in particular a micro-lens, for collimating the respective light beam 6. The light beams 5 are emitted from the multi-beam optical element 4 slanted (i.e. deviating from perpendicular) with respect to the boundary surface 25 of the transparent substrate 17.

The at least two light beams 5 emitted by the multi-beam optical element 4 impinge on the despeckling device 3 (in particular the mirror 18) in a slanted angle and are reflected by the despeckling device 3 back at the multi-beam optical element 4. Each of the light beams 5 is deflected by the respective optical redirecting element 27 such that the respective light beam 5 is perpendicular to the boundary surface 25, while avoiding the respective lens 30. The light beams 5 then traverse the transparent substrate 17. Fig. 9d shows the incoherent irradiance of the far-field of the light beams 5.

This embodiment of the multi-beam optical element 4 may for example be implemented in the embodiment of Fig. 1.

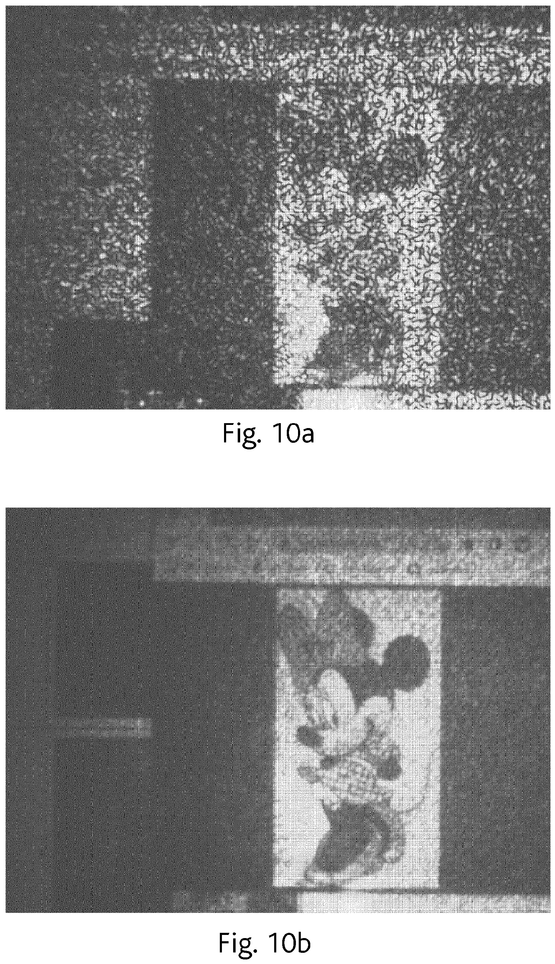

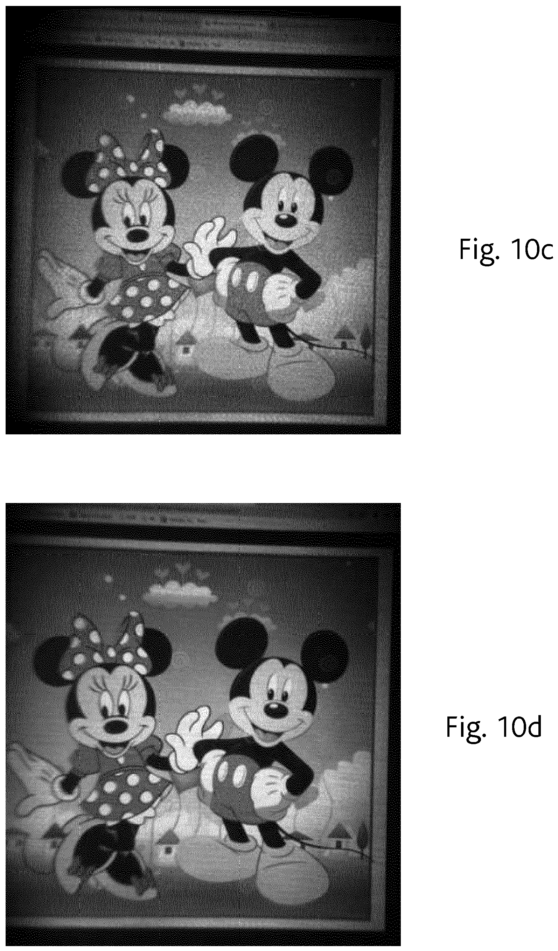

Fig. 10a shows an image projected by an AR projector generated using a single laser and no despeckling. Fig. 10b shows an image projected by an AR projector generated using a single laser despeckled by a MEMS mirror. Fig. 10c shows an image projected by an AR projector generated using a plurality of laser beams and no despeckling. Fig. 10d shows an image projected by an AR projector generated using a plurality of laser beams despeckled by a MEMS mirror. Further, Figs. 10c-10d are colour projections, wherein the images have been converted to greyscale for this disclosure.

As can be seen by comparison of Fig. 10a and 10b, using a MEMS mirror for despeckling provides a better (i.e. lower) speckle contrast ratio. However, even when using a MEMS mirror for despeckling, speckles are still visible if only a single laser beam is used (see Fig. 10b). The speckle contrast ratio can only be reduced sufficiently by using more than one laser beam and a despeckling device (see Fig. 10d).

For Fig. 10c and 10d, a large number of light beams was used (with a multi-beam optical element 4 similar to the one shown in Fig. 4). The speckle contrast ratio is proportional to the number of beams used, such that using at least two beams emitted from different positions already provides an advantage over a single beam.

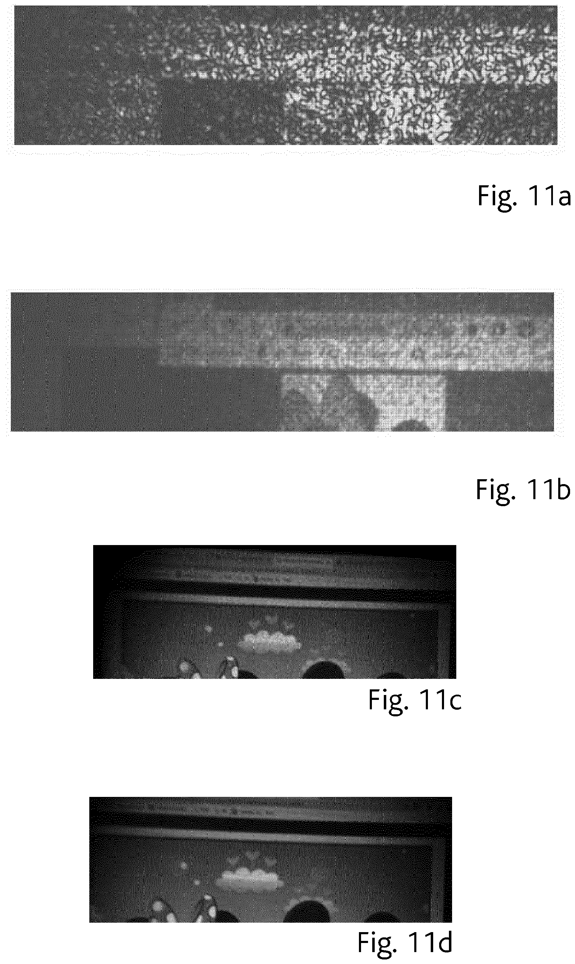

Fig. 11a shows an image projected by an AR projector generated using a single laser and no despeckling. Fig. 11b shows an image projected by an AR projector generated using a single laser despeckled by a MEMS mirror. Fig. 11c shows an image projected by an AR projector generated using a plurality of laser beams and no despeckling. Fig. 11d shows an image projected by an AR projector generated using a plurality of laser beams despeckled by a MEMS mirror. Further, Figs. 11c-11d are colour projections, wherein the images have been converted to greyscale for this disclosure.

Figs. 11a to 11d are cropped versions of Figs. 10a to 10d. The conclusions drawn in the context of Figs. 10a to 10d also apply for these figures.

## Claims

1. Optical device (1) for providing illumination of an area (2), comprising:
- a despeckling device (3) configured for dynamically and continuously altering beam paths and/or phases of light beams incident on the despeckling device (3),
- a multi-beam optical element (4) configured for emitting at least two light beams (5) at the despeckling device upon coupling of light into the multi-beam optical element (4),
wherein each one of the at least two light beams (5) is emitted by the multi-beam optical element (4) from a position (6), which differs from the positions (6) from which the respective other ones of the at least two light beams (5) are emitted by the multi-beam optical element (4),
wherein the at least two light beams (5) are emitted such that each one of the at least two light beams (5) at least partially overlaps with at least another one of the at least two light beams (5) at the area (2) to be illuminated.

2. Optical device according to claim 1, further comprising a diffuser (7) arranged in the beam paths of the at least two light beams (5) emitted by the multi-beam optical element (4) upon coupling of light into the multi-beam optical element (4).

3. Optical device according to claim 2, wherein the diffuser (7) is arranged in the beam paths of the at least two light beams (5) emitted by the multi-beam optical element (4) upon coupling of light into the multi-beam optical element (4) optically between the despeckling device (3) and the multi-beam optical element (4).

4. Optical device according to any one of the previous claims,
wherein the multi-beam optical element (4) is configured for coupling of light into the multi-beam optical element (4) from a first external light source (8a) and from a second external light source (8b) such that light coupled into the multi-beam optical element (4) from the first external light source (8a) provides a first subset (9a) of the at least two light beams (5) emitted by the multi-beam optical element (4) and light coupled into the multi-beam optical element (4) from the second external light source (8b) provides a second subset (9b) of the at least two light beams (5) distinct from the first subset (9a),
wherein the first subset (9a) illuminates a first subarea of the area (2) to be illuminated and the second subset (9b) illuminates a second subarea of the area (2) to be illuminated, wherein the first subarea and the second subarea are at least partially non-overlapping.

5. Optical device according to any one of the previous claims, wherein the multi-beam optical element (4) comprises:
- a bus waveguide (10) for receiving light coupled into the multi-beam optical element (4),
- at least two fan-out waveguides (11) associated with the bus waveguide (10), wherein each of the at least two fan-out waveguides (11) associated with the bus waveguide (10) is arranged for providing one of the at least two light beams (5) to be emitted by the multi-beam optical element (4), wherein for each of the at least two fan-out waveguides (11) associated with the bus waveguide (10) there is provided for a fan-out optical coupler (12) for coupling light from the bus waveguide (10) to the respective one of the at least two fan-out waveguides (11) associated with the bus waveguide (10).

6. Optical device according to claim 5, wherein the bus waveguide (10) is a first bus waveguide (10a),
wherein the multi-beam optical element (4) further comprises:
- a second bus waveguide (10b) for receiving light coupled into the multi-beam optical element (4),
- at least two fan-out waveguides (11b) associated with the second bus waveguide (10b) wherein each of the at least two fan-out waveguides (11b) associated with the second bus waveguide (10b) is arranged for providing one of the at least two light beams (5) to be emitted by the multi-beam optical element (4), wherein for each of the at least two fan-out waveguides (11b) associated with the second bus waveguide (10b) there is provided for a fan-out optical coupler (12) for coupling light from the second bus waveguide (10b) to the respective one of the at least two fan-out waveguides (11b) associated with the second bus waveguide (10b).

7. Optical device according to claim 6, wherein the multi-beam optical element (4) further comprises
- a primary waveguide (13) for receiving light coupled into the multi-beam optical element (4),
- a first bus optical coupler (14a) for coupling light from the primary waveguide (13) to the first bus waveguide (10a),
- a second bus optical coupler (14b) for coupling light from the primary waveguide (13) or the first bus waveguide (10a) to the secondary bus waveguide (10b).

8. Optical device according to claim 7, wherein the first bus optical coupler (14a) comprises an adjustment structure (15) for adjusting a proportion of light coupled from the primary waveguide (13) to the first bus waveguide (10a),
wherein optionally as the adjustment structure (15) there is provided for an interferometric structure, wherein a section of the primary waveguide (13) forms a first arm of the interferometric structure and a section of the first bus waveguide (10a) forms a second arm of the interferometric structure, wherein the first arm and/or the second arm comprise(s) a phase shifter.

9. Optical device according to any one of claims 5 to 8, the multi-beam optical element (4) further comprising:
- a first bus set (16a) configured for receiving light from a first external light source (8a), the first bus set (16a) comprising the bus waveguide (10) and the at least two fan-out waveguides (11) associated with the bus waveguide (10) and
- a second bus set (16b) configured for receiving light from a second external light source (8b) different from the first external light source (8a), comprising:
- a bus waveguide (10') of the second bus set(16b),
- at least two fan-out waveguides (11') associated with the bus waveguide (10') of the second bus set (16b), wherein each of the at least two fan-out waveguides (11') associated with the bus waveguide (10') of the second bus set (16b) is arranged for providing one of the at least two light beams (5) to be emitted by the multi-beam optical element (4), wherein for each of the at least two fan-out waveguides (11') associated with the bus waveguide (10') of the second bus set (16b) there is provided for a fan-out optical coupler for coupling light from the bus waveguide (10') of the second bus set (16b) to the respective one of the at least two fan-out waveguides (11') associated with the bus waveguide (10') of the second bus set (16b) .

10. Optical device according to any one of claims 5 to 9, wherein the multi-beam optical element (4) further comprises a transparent substrate (17), wherein the bus waveguide (10) is at least partially provided in the transparent substrate (17) and the at least two fan-out waveguides (11) are provided in the transparent substrate (17), wherein the bus waveguide (10) and the at least two fan-out waveguides (11) are optionally provided in the transparent substrate (17) by femtosecond direct laser writing, wherein the transparent substrate (17) is arranged such that the light beams (5) emitted by the multi-beam optical element (4) upon coupling of light into the multi-beam optical element (4) pass through the transparent substrate (17) after interaction with the despeckling device (3).

11. Optical device according to any one of the previous claims, wherein the despeckling device (3) comprises a mirror (18) for reflecting the at least two light beams (5) emitted by the multi-beam optical element (4) upon coupling of light into the multi-beam optical element (4) and a deflecting device for providing a continuous variation of a position of surface points of the mirror (18).

12. Optical device according to claim 11, wherein the deflecting device is configured for continuous tilting of the mirror (18).

13. Optical device according to any one of claims 11 or 12, wherein the deflecting device is configured for inducing surface waves on a surface of the mirror (18).

14. Optical device according to any one of the previous claims, in particular backlight or frontlight device, comprising a laser light source for providing light for coupling into the multi-beam optical element (4).

15. Optical device according to any one of the previous claims, in particular display device or projection device, comprising a display element (20), optionally a reflective or transmissive display element, in particular an LCOS-panel, an LCD-panel or a DLP-panel, wherein the at least two light beams (5) emitted by the multi-beam optical element (4) upon coupling of light into the multi-beam optical element (4) are propagated to the display element (20), wherein the display element (20) comprises the area (2) to be illuminated, wherein optionally there is provided for a polarizing beam splitter (21) arranged for passing or blocking light beams emanating from the display element (21) dependent on a current pixel state of the display element (21).
